# EUROPÄISCHE PATENTSCHRIFT

(11) **EP 1 865 028 B1**
(45) Veröffentlichungstag und Bekanntmachung des Hinweises auf die Patenterteilung: **30.12.2009**
(21) Anmeldenummer: 07011102.6
(22) Anmeldetag: 06.06.2007
(51) Int. Cl.: C08L 69/00, C08K 5/523, C08L 25/02, C08L 55/02, C08L 71/12

(54) **Brom- und chlorfreie Polycarbonat- Formmassen**
Bromine and chlorine-free polycarbonate moulding materials
Masses de formages en polycarbonate sans brome ni chlore

(30) Priorität: 09.06.2006 DE 102006026810
(43) Veröffentlichungstag der Anmeldung: 12.12.2007
(73) Patentinhaber: ROMIRA GmbH, 25421 Pinneberg (DE)
(72) Erfinder: Ding, Jianmin, 22459 Hamburg (DE)
(74) Vertreter: Wagner, Jutta

(56) Entgegenhaltungen:
- EP-A1- 0 943 653
- EP-A2- 0 697 441
- US-A- 5 900 446

## Beschreibung

Die Erfindung betrifft Formmassen aus brom- und chlorfreien Polycarbonat-Zusammensetzungen mit flammwidrigen Phosphatverbindungen .

Polycarbonatformmassen werden bereits seit langem für verschiedene Zwecke eingesetzt. Dem Polycarbonat sind zur Gewährleistung von Verarbeitungs- und Gebrauchseigenschaften verschiedene Zusätze beigefügt. So ist üblicherweise ein gewisser Anteil eines schlagzähen bzw. elastomeren Polymers, meist AcrylnitrilButadien-Styrot-Copolymerisat (ABS), zugesetzt.

Eine besonders wichtige Eigenschaft ist die Flammbeständigkeit. Zunächst wurden Halogen-haltige Flammschutzmittel verwendet. Da jedoch Halogen-haltige Polymere, insbesondere Brom- und/oder Chlor-haltige Polymere immer häufiger auf Ablehnung stoßen, wurde nach Halogen-freien Flammschutzmitteln gesucht. Vielfältige Lösungen sind bekannt. Der Einsatz von Diphosphaten als Flammschutzmittel für Polycarbonat-ABS Formmassen ist beispielsweise in der EP 0 363 608 B2 beschrieben.

Auch die Gebrauchseigenschaften wurden durch Modifikation der Zusammensetzungen und der Bestandteile immer weiter optimiert. So ist zum Erzielen einer besseren Spannungsrissbeständigkeit der Polycarbonat (PC)-Anteil zu senken. Problematisch bei der Reduktion des Polycarbonat-Anteils unter 60% ist, dass die Polycarbonat-Zusammensetzungen die Brandklasse V0 nach. UL 94 nicht mehr erreichen. Um die Brandklasse V0 sicher zu erreichen, kann zusätzlich bromiertes Polycarbonat (Br-PC) zugegeben werden. Diese Polycarbonat-Zusammensetzungen sind allerdings nicht als bromfreies Material zu sehen. Auch wird die Wärmeformbeständigkeit der PC-ABS-Formmasse durch die Zugabe dieses Flammschutzmittels drastisch reduziert.

Aufgabe der Erfindung ist es, flammgeschützte, brom- und chlorfreie Polycarbonat-Zusammensetzungen bereitzustellen, die neben einer hervorragenden Brandschutzwirkung eine verbesserte Thermostabilität und eine hohe Wärmeformbeständigkeit besitzen.

Es wurde nun überraschend gefunden, dass bei Polycarbonat-ABS Formmassen, die mit Oligophosphaten auf Basis von Bisphenol-A als Flammschutzmittel ausgerüstet sind, durch Zugabe von Polyphenylenether das gewünschte Eigenschaftsprofil, wie z.B. eine erhöhte Warmformbeständigkeit, erreicht werden kann und diese gleichzeitig ein verbessertes Nachbrennverhalten insbesondere bei niedrigeren PC-Gehalten (PC < 60%) aufweisen.

Gegenstand der Erfindung sind daher Polycarbonat-Zusammensetzungen, insbesondere thermoplastische Polycarbonat-Zusammensetzungen, die
A) 40 bis 94 Gew.-% aromatisches Polycarbonat und/oder Polyestercarbonat
B) 0,5 bis 19 Gew.-% Pfropfpolymerisat mit kautschukelastischen Eigenschaften, wobei das Pfropfpolymerisat ein ABS-Polymerisat ist
C) 0,5 bis 20 Gew.-% Phosphatverbindung der allgemeinen Formel (I) 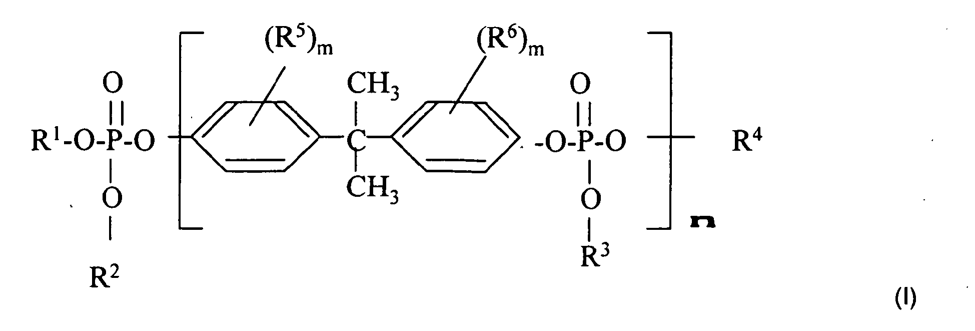 in der R¹, R², R³ und R⁴, unabhängig voneinander C₁ bis C₈-Alkyl, jeweils gegebenenfalls durch Alkyl substituiertes C₅ bis C₆-Cycloalkyl, C₆ bis C₁₀-Aryl oder C₇ bis C₁₂- Aralkyl bedeuten,
   m unabhängig voneinander 0, 1, 2, 3 oder 4 ist,
   n 0,1 bis 5 ist und
   R⁵ und R⁶ unabhängig voneinander C₁ bis C₄-Alkyl bedeuten,
D) 0 bis 30 Gew.% mindestens eines thermoplastischen Polymers, ausgewählt aus der Gruppe der Vinyl(co)polymerisate
E) 0 bis 5 Gew.-% fluoriertes Polyolefin,
F) 0,5 bis 7 Gew.-% Polyphenylenether
   enthalten, wobei sich die Mengen der Komponenten zu 100 Gew.-% addieren.

Bevorzugt sind Zusammensetzungen, enthaltend:
A) 45 bis 75 Gew.-%, insbesondere 45 bis 60 Gew.-% aromatisches Polycarbonat und/oder Polyestercarbonat
B) 2 bis 18 Gew.-%, insbesondere 3 bis 20 Gew.-% Pfropfpolymerisat, wobei das Pfropfpolymerisat ein ABS-Polymerisat ist
C) 1 bis 18 Gew.-% Phosphatverbindung (I) oder eine Mischung von Phosphatverbindungen (I)
E) 0 bis 5 Gew.-% fluoriertes Polyolefin,
D) 0 bis 30 Gew.-% mindestens eines thermoplastischen Polymers, ausgewählt aus der Gruppe der Vinyl(co)polymerisate
F) 0,5 bis 6 Gew.-% Polyphenylenether
wobei sich die Mengen der Komponenten zu 100 Gew.-% addieren.

Nachfolgend werden die zur Herstellung der erfindungsgemäßen Zusammensetzungen geeigneten Komponenten A (Polycarbonat oder Polyestercarbonat), B (Pfropfpolymerisat), C (Copolymerisat), D (Polyphenylenether), E (Phosphatverbindung) und F (fluorierte Polyolefine) einzeln näher beschrieben.

### Komponente A

Erfindungsgemäß geeignete aromatische Polycarbonate und/oder aromatische Polyestercarbonate gemäss Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 14 95 626, DE-A 22 32 877, DE-A 27 03 376, DE-A 27 14 544, DE-A 30 00 610, DE-A 38 32 396; zur Herstellung aromatischer Polyestercarbonate z. B. DE-A 30 77 934).

Bevorzugt werden als Komponente A halogenfreie Polycarbonate eingesetzt. Geeignete halogenfreie Polycarbonate sind beispielsweise aromatische Polycarbonate, vorzugsweise solche auf Basis von Bisphenol A, insbesondere mit Kettenlängen von ca. 100 Monomeren.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Die Herstellung der Polycarbonate kann beispielsweise durch Umsetzung der Diphenole wie Bisphenol A mit Kohlensäurehalogeniden, vorzugsweise Phosgen, und/oder mit aromatischen Dicarbonsäuredihalogeniden, vorzugsweise Benzoldicarbonsäuredihalogeniden nach dem Phasengrenzflächenverfahren erfolgen. Gewünschten falls können Kettenabbrecher, beispielsweise Monophenole, und/oder Verzweiger, beispielsweise Tri- oder Tetraphenole, verwendet werden. Die Herstellung kann beispielsweise auch durch Umsetzung von Diphenolen mit Phosgen nach dem Verfahren in homogener Phase (Pyridinverfahren) erfolgen.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

### Komponente B

Erfindungsgemäß einsetzbare Pfropfpolymerisate B sind ABS-Polymerisate umfassen z. B. Pfropfcopolymerisate mit kautschukelastischen Eigenschaften, die im wesentlichen aus den folgenden Monomeren erhältlich sind: Butadien-1,3, Styrol, Acrylnitril, wie sie z. B. in "Methoden der Organischen Chemie" (Houben-Weyl), Bd. 14/1, Georg Thieme-Verlag, Stuttgart 1961, S. 393-406 und in C. B. Bucknall, "Thoughened Plastics", Appl. Science Publishers, London 1977, beschrieben sind.

Insbesondere umfasst die Komponente B ein oder mehrere Pfropfpolymerisate von
B.1: 5 bis 95, vorzugsweise 30 bis 90 Gew.%, wenigstens eines Vinylmonomeren auf
B.2: 95 bis 5. vorzugsweise 70 bis 10 Gew.-% einer oder mehrerer Pfropfgrundlagen mit Glasübergangstemperaturen < 10 °C, vorzugsweise < 0 °C, besonders bevorzugt < -20 °C.

Monomere B.1 sind vorzugsweise Gemische aus
B.1.1: 50 bis 99 Gew.-Teilen Styrol, und
B.1.2: bis 50 Gew.-Teilen ungesättigte Nitrile wie Acrylnitril und Methacrylnitril.

Ganz besonders bevorzugte Monomere sind Styrol (B.1.1) und Acrylnitril (B.1.2).

Für die Pfropfpolymerisate B geeignete Pfropfgrundlagen B.2 sind Dienkautschuke, auf Basis Butadien mit der Maßgabe, dass die Glasübergangstemperatur der Komponente B.2 unterhalb < 10 °C, vorzugsweise < 0 °C, besonders bevorzugt < -10 °C liegt.

Polymerisate B sind ABS-Polymerisate (Emulsions-, Masse- und Suspensions-ABS), wie sie z. B. in der DE-A 20 35 390 oder der DE-A 22 48 242 bzw. in Ullmann, Enzyklopädie der Technischen Chemie, Bd. 19 (1980), S. 280 ff. beschrieben sind.

Die Pfropfcopolymerisate B werden durch radikalische Polymerisation, z. B. durch Emulsions-, Suspensions-, Lösungs- oder Massepolymerisation hergestellt.

### Komponente C

Die erfindungsgemäßen Zusammensetzungen enthalten als Flammschutzmittel Phosphatverbindungen der allgemeinen Formel (1), 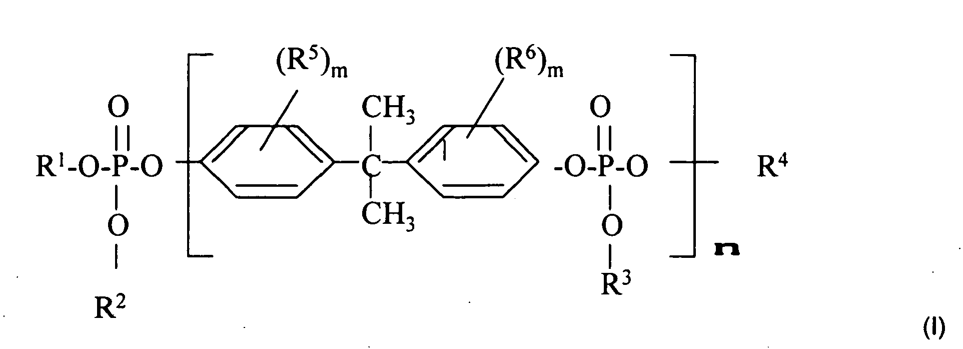 worin R¹, R², R³ und R⁴, unabhängig voneinander C₁ bis C₈-Alkyl, jeweils gegebenenfalls durch Alkyl substituiertes C₅ bis C₆-Cycloalkyl, C₆ bis C₁₀-Aryl oder C₇ bis C₁₂-Aralkyl,
m unabhängig voneinander 0, 1, 2, 3 oder 4 ist,
n 0,1 bis 5, vorzugsweise 1 bis 1,5 ist und
R⁵ und R⁶ unabhängig voneinander C₁ bis C₄-Alkyl, vorzugsweise Methyl bedeuten.

Die erfindungsgemäß geeigneten Phosphatverbindungen gemäss Komponente C sind generell bekannt (siehe beispielsweise Ullmanns Enzyklopädie der Technischen Chemie, Bd. 18, S. 301 ff. 1979; Houben-Weyl, Methoden der Organischen Chemie, Bd. 12/1, S. 43; Beilstein, Bd. 6, S. 177).

Bevorzugte Substituenten R¹ bis R⁴ umfassen Methyl, Butyl, Octyl, Phenyl, Kresyl, Cumyl, Naphthyl.

Die aromatischen Gruppen R¹, R², R³ und R⁴ können mit C₁ bis C₄-Alkyl substituiert sein. Besonders bevorzugte Aryl-Reste sind Kresyl, Phenyl, Xylenyl, Propylphenyl oder Butylphenyl.

R⁵ und R⁶ bedeuten unabhängig voneinander vorzugsweise Methyl.

n kann Werte von 0,1 bis 5, vorzugsweise 0,9 bis 2,5, insbesondere 1 bis 1,5 annehmen.

Als erfindungsgemäße Komponente C können auch Mischungen verschiedener Phosphate eingesetzt werden. In diesem Fall ist n ein Durchschnittswert.

Die mittleren n-Werte können bestimmt werden, indem mit einer geeigneten Methode (Gaschromatographie (GC), High Pressure Liquid Chromatography (HPLC), Gelpermeationschromatographie (GPC)), ³¹P-Kernresonanzspektroskopie (³¹P-NMR), die Zusammensetzung der Phosphat-Mischung (Molekulargewichtsverteilung) bestimmt wird und daraus die Mittelwerte für n berechnet werden.

### Komponente D

Die Komponente D umfasst ein oder mehrere thermoplastische Vinyl- (co)polymerisate. Als Vinyl(co)Polymerisate sind Polymerisate von mindestens einem Monomeren aus der Gruppe der Vinylaromaten, Vinylcyanide (ungesättigte Nitrile), (Meth)Acrylsäure-C₁ bis C₈-Alkylester, ungesättigte Carbonsäuren sowie Derivate (wie Anhydride und Imide) ungesättigter Carbonsäuren geeignet. Insbesondere geeignet sind (Co)Polymerisate aus
D.1: 50 bis 99, vorzugsweise 60 bis 80 Gew.-% Vinylaromaten und/oder kernsubstituierten Vinylaromaten wie beispielsweise Styrol, alpha - Methylstyrol, p-Methylstyrol) und/oder (Meth)Acrylsäure-C₁ bis C₈-Alkylester wie z. B. Methylmethacrylat, Ethyhnethacrylat), und
D.2: 1 bis 50, vorzugsweise 20 bis 40 Gew.-% Vinylcyaniden (ungesättigte Nitrile) wie Acrylnitril und Methacrylnitril und/oder (Meth)Acrylsäure-C₁ bis C₈-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl- Maleinimid).

Die (Co)Polymerisate D sind harzartig, thermoplastisch und kautschukfrei.

Besonders bevorzugt ist ein Copolymerisat aus D.1 Styrol und D.2 Acrylnitril,

Die (Co)Polymerisate D sind bekannt und lassen sich durch radikalische Polymerisation, insbesondere durch Emulsions-, Suspensions-, Lösungs- oder Massepolymerisation, herstellen.

### Komponente E

Als weitere Komponente können fluorierte Polyolefine zugesetzt werden. Die fluorierten Polyolefine E sind hochmolekular und besitzen Glasübergangstemperaturen von über -30 °C, in der Regel von über 100 °C; Fluorgehalte, vorzugsweise von 65 bis 76, insbesondere von 70 bis 76 Gew.-%; mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³

Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-interscience, John Wiley & Sons, Inc., New York, Band 13, 1970, Seite 623-654; "Modern Plastics Encyclopedia", 1970-1971, Band 47, Nr. 10A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US 3 671 487, US 3 723 373 und US 3 838 092).

Sie können nach bekannten Verfahren hergestellt werden, beispielsweise durch Polymerisation von Tetrafluorethylen in wässrigem Medium mit einem freie Radikale bildenden Katalysator, beispielsweise Natrium-, Kalium- oder Ammoniumperoxiddisulfat bei Drucken von 7 bis 71 kg/cm² und bei Temperaturen von 0 bis 200 °C, vorzugsweise bei Temperaturen von 20 bis 100 °C, wie beispielsweise in der US 2 393 967 beschrieben. Je nach Einsatzform kann die Dichte dieser Materialien zwischen 1,2 und 2,3 g/cm³, die mittlere Teilchengröße zwischen 0,5 und 1.000 µm liegen.

Erfindungsgemäß bevorzugte fluorierte Polyolefine E sind Tetrafluorethylenpolymerisate mit mittleren Teilchendurchmessern von 0,05 bis 20 µm, vorzugsweise 0,08 bis 10 µm, und eine Dichte von 1,2 bis 1,9 g/cm³. Geeignete Tetrafluorethyfenpolymerisat-Emulsionen sind handelsübliche Produkte und werden beispielsweise von der Firma DuPont als Teflon 30 PTFE Dispersion angeboten.

Geeignete, in Pulverform einsetzbare fluorierte Polyolefine E sind Tetrafluorethylenpolymerisate mit mittleren Teilchendurchmessern von 100 bis 1.000 µm und Dichten von 2,0 g/cm³ bis 2,3 g/cm³ und werden z.B. von den Firma Dyneon GmbH unter dem Handelsnamen Dyneon TM PTFE angeboten.

### Komponente F

Als Komponente F wird erfindungsgemäss wenigstens ein an sich bekannter Polyphenylenether (PPE) verwendet. Insbesondere sind dies Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiel für Substituenten sind Alkylreste mit 1 bis 4 Kohlenstoffatomen, die vorzugsweise kein alpha-ständiges tertiäres Wasserstoffatom aufweisen, z. B. Methyl-, Ethyl-, Propyl- oder Butylreste, zu nennen. Die Alkylreste können wiederum durch Hydroxylgruppen substituiert sein. Weitere Beispiele möglicher Substituenten sind Alkoxyreste, vorzugsweise mit bis zu 4 Kohlenstoffatomen, wie Methoxy, Ethoxy, n-Propoxy und n-Butoxy, oder gegebenenfalls durch Alkylgruppen substituierte Phenylreste. Ebenfalls geeignet sind Copolymere verschiedener Phenole wie z. B. Copolymere von 2,6-Dimethylphenol und 2,3,6-Trimethylphenol, selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether), Poly(2,6-dimethoxy-1,4-phenylenether), Poly(2,6-diethoxy-1,4-Phenylenether), Poly(2-methoxy-6-ethoxy-1,4-phenylenether), Poly(2-ethyl-6-stearyloxy-1,4-phenylenether,Poly(2-methyl-6-phenyl-1,4-phenylenether), Poly(2,6-dibenzyl- 1,4-phenylenether), Poly(2-ethoxy-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenether im Sinne der Erfindung sollen auch solche verstanden werden, die mit Monomeren, wie Fumarsäure, Maleinsäure oder Maleinsäureanhydrid, modifiziert sind.

Derartige Polyphenylenether sind u. a. in der WO 87/00540 beschrieben.

Hinsichtlich der physikalischen Eigenschaften der Polyphenylenether werden solche in den Zusammensetzungen eingesetzt, die ein mittleres Molekulargewicht Mw (Gewichtsmittel) von etwa 8.000 bis etwa 70.000, vorzugsweise etwa 12.000 bis etwa 60.000 und insbesondere etwa 25.000 bis etwa 50.000, aufweisen. Dies entspricht einer Grenzviskosität von etwa 0,18 bis etwa 0,7, vorzugsweise von etwa 0,25 bis etwa 0,62 und insbesondere von etwa 0,39 bis etwa 0,55 dl/g, gemessen in Chloroform bei 25 °C.

Die Bestimmung der Molekulargewichtsverteilung erfolgt im allgemeinen mittels Gelpermeationschromatographie (Shodex-Trennsäule 0,8 x 50 cm des Typs A 803, A 804 und A 805 mit Tetrahydrofuran THF als Elutionsmittel bei Raumtemperatur). Die Lösung der PPE-Proben in THF erfolgt unter Druck bei 110 °C, wobei 0,16 ml einer 0,25 Gew.-°/o-igen Lösung injiziert werden. Die Detektion erfolgt im allgemeinen mit einem UV Detektor. Die Kalibrierung der Säulen wurde mit PPE-Proben durchgeführt, deren absolute Molekulargewichtsverteilungen durch eine OPC-Laser-Lichtstreuungskombination bestimmt wurde.

Die erfindungsgemäßen Zusammensetzungen können wenigstens eines der üblichen Additive, wie Gleit- und Entformungsmittel, beispielsweise Pentaerythrittetrastearat, Antistatika, Stabilisatoren, Füll- und Verstärkungsstoffe sowie Farbstoffe und Pigmente enthalten.

Die gefüllten bzw. verstärkten Zusammensetzungen können bis zu 60. vorzugsweise 10 bis 40 Gew.-%, bezogen auf die gefüllte bzw. verstärkte Zusammensetzung, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Zusammensetzungen können bis zu 35 Gew.-%, bezogen auf die Gesamt-Zusammensetzung, eines weiteren, gegebenenfalls synergistisch wirkenden Flammschutzmittels, ausgewählt unter Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdänoxid, Ammoniummolybdat, Zinkborat, Ammoniumborat, Bariummetaborat, Talkum, Silikat, Siliziumoxid und Zinnoxid, enthalten. Als weiteres Flammschutzmittel können weiterhin verschiedene Monophosphatverbindungen, oligomere Phosphatverbindungen oder Mischungen daraus eingesetzt werden. Solche Phosphatverbindungen sind z.B. in der EP-A 0 363 608, EP-A 0 345 522 und DE-A 197 21 628 beschrieben. Es ist von Vorteil, dass die erfindungsgemäße Zusammensetzung zur Erreichung der gewünschten Flammwidrigkeit V0 nach 94 (IEC 60695-11-10) bei einer Stärke von 1,5 mm keine weiteren Flammschutzmittel benötigen und vorzugsweise auch nicht enthalten.

Die erfindungsgemäßen Zusammensetzungen enthaltend die Komponenten A bis F und gegebenenfalls weitere bekannte Zusätze wie Stabilisatoren, Farbstoffe, Pigmente, Gleit- und Entformungsmittel sowie Antistatika, Füll- und Verstärkungsstoffe werden hergestellt, indem man die jeweiligen Bestandteile in bekannter Weise vermischt und bei Temperaturen von 200 °C bis 300 °C in üblichen Aggregaten wie Innenknetern, Extrudern und Doppetwellenschnecken schmelzecompoundiert und schmeizextrudiert.

Die Vermischung der einzelnen Bestandteile kann in bekannter Weise sowohl sukzessive als auch simultan erfolgen, und zwar sowohl bei etwa 23 °C (Raumtemperatur) als auch bei höherer Temperatur.

Die erfindungsgemäßen thermoplastischen Zusammensetzungen eignen sich aufgrund ihrer ausgezeichneten Flammfestigkeit, insbesondere der kurzen Nachbrennzeit, und ihrer höheren Wärmeformbeständigkeit zur Herstellung von Formkörpern jeglicher Art. Insbesondere können Formkörper durch Spritzguss hergestellt werden. Beispiele für herstellbare Formkörper sind: Gehäuseteile jeder Art, z. B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor.

Weiterhin können die erfindungsgemäßen Zusammensetzungen beispielsweise zur Herstellung von folgenden Formkörpern bzw. Formteilen verwendet werden: Innenausbauteile für Schienenfahrzeuge, Radkappen, Gehäuse von Kleintransformatoren enthaltenden Elektrogeräten, Gehäuse für Geräte zur Informationsverbreitung und -übermittlung, Gehäuse und Verkleidung für medizinische Zwecke, Massagegeräte und Gehäuse dafür, Spietfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Nachfolgend wird die Erfindung anhand von Ausführungsbeispielen näher beschrieben, ohne jedoch darauf beschränkt zu sein. Soweit nicht anders angegeben beziehen sich sämtliche %- und Anteilsangaben im Rahmen der vorliegenden Erfindung auf das Gewicht.

### Beispiele

### Komponente A

Polycarbonat auf Basis Bisphenol A mit einem Schmelzindex von 13 g/10 min, gemessen gemäß DIN EN ISO 1133 bei 300°C und mit einem Gewicht von 1,2 kg.

### Komponente B

Pfropfpolymerisat von 42 Gew.-% eines Copolymerisats aus Styrol und Acrylnitril im Verhältnis von 75 : 25 auf 58 Gew.-% teilchenförmigen vernetzten Polybutadienkautschuk (Pfropfgrad = 55 Gew.%, mittlerer Teilchendurchmesser d = 250 µm), hergestellt durch Emulsionspolymerisation.

### Komponente C

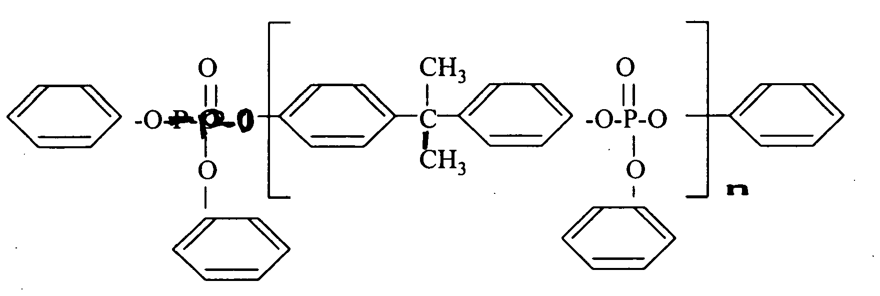

n <= 1,1

Zur Bestimmung des mittleren n-Wertes werden zuerst die Anteile der Monomeren und oligomeren Phosphate durch ³¹P-Kernresonanzspektroskopie (³¹P-NMR). bestimmt. Aus den Anteilen der einzelnen Komponenten Mono- und Oligophosphate werden dann nach bekannten Verfahren die zahlengewichteten Mittelwerte berechnet.

### Komponente D

Styrol/Acrylnitril-Copolymerisat mit einem Styrol/Acrylnitril-Verhältnis von 68 : 32 und einem Schmelzindex von 9 g/10 min, gemessen gemäß DIN EN ISO 1133 bei 230 °C und mit einem Gewicht von 3,8 kg.

### Komponente E

Tetrafluorethylenpolymerisat Pulver Dynon TM PTFE PA 5933, Partikeldurchmesser > 1000 µm ≤ 4 %, Dichte 2,165 g/cm³.

### Komponente F

PPE Pulver, mittleres Molekulargewicht 40000 g/mol.

Herstellung und Prüfung der Zusammensetzungen:
Die Herstellung der erfindungsgemäßen Zusammensetzungen mit den üblichen Verarbeitungshilfsmitteln erfolgt auf einem gleichläufigem Doppelschneckenextruder bei 280°C. Die Formkörper werden auf einer Spritzgussmaschine Typ Arburg 320 C bei 240 °C hergestellt. Die Vergleichszusammensetzungen werden analog hergestellt.

Die Flammwidrigkeit wird nach UL 94 (lEC 60695-11-10) bestimmt. Angegeben sind jeweils die Werte für 1,5 mm.
Die Bestimmung der Wärmeformbeständigkeit nach Vicat B erfolgt gemäss DIN EN ISO 306 in Silikonöl an Stäben der Abmessung 80 x 10 x 4 mm.
Die Kerbschlagzähigkeit wird nach DIN EN ISO 179/1eA gemessen.

Die Ergebnisse für Formkörper aus erfindungsgemäßen und nicht erfindungsgemäßem Formmassen sind in Tabelle 1 zusammengestellt.

**Tabelle: Zusammensetzungen und ihre Eigenschaften**

| | Vergl. A | Vergl. B | Vergl. C | Beisp. 1 | Vergl. D | Beisp. 2 |
|---|---|---|---|---|---|---|
| Komponete | | | | | | |
| A [Gew.%] | 53,0 | 54,0 | 50,0 | 54,0 | 72,0 | 66,0 |
| B [Gew.%] | 18,0 | 18,0 | 18,0 | 18,0 | 7,0 | 7,0 |
| C [Gew.%] | 17,0 | 16,0 | 16,0 | 16,0 | 13,0 | 13,0 |
| D [Gew.%] | 11,4 | 11,4 | 5,4 | 5,4 | 7,6 | 7,6 |
| E [Gew.%] | 0,6 | 0,6 | 0,6 | 0,6 | 0,4 | 0,4 |
| F [Gew.%] | - | - | 10,0 | 6,0 | - | 6,0 |

| Eigenschaften | | | | | | |
|---|---|---|---|---|---|---|
| UL 94 | HB | HB | V0 | V0 | V0 | V0 |
| Vicat B | 82°C | 83°C | 87°C | 88°C | 94 | 98 |
| Kerbschlagzähigkeit | 38,0 kJ/m² | 38,6 kJ/m² | 3,1 kJ/m² | 10,4 kJ/m² | n.b. | n.b. |

| | | | | | | |
|---|---|---|---|---|---|---|
| n.b.= nicht bestimmt | | | | | | |

Aus der Tabelle ist ersichtlich, dass die Zusammensetzungen gemäß Beispielen 1 und 2 mit der Komponente F eine verbesserte Wärmeformständigkeit (Vicat B 50) und eine bessere Brandklasse (UL-94) als die Zusammensetzungen des Vergleichsbeispiels A und B ohne Komponente F aufweisen. Im Vergleich zu Vergleichsbeispiel C hat die Zusammensetzung 2 eine verbesserte Wärmeformständigkeit (Vicat B 50) und die Zusammensetzung 1 eine höhere Kerbschlagzähigkeit.

## Patentansprüche

1. Formmassen bestehend aus
A) 40 bis 94 Gew.-% aromatisches Polycarbonat und/oder Polyestercarbonat
B) 0,5 bis 19 Gew.-% Pfropfpolymerisat mit kautschukelastischen Eigenschaften, wobei das Pfropfpolymerisat ein ABS-Polymerisat ist
C) 0,5 bis 20 Gew.-% Phosphatverbindung der allgemeinen Formel (I) 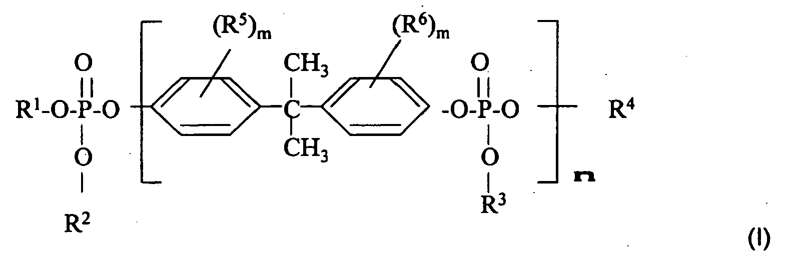
wobei R¹, R², R³ und R⁴, unabhängig voneinander C₁ bis C₈-Alkyl, jeweils gegebenenfalls durch Alkyl substituiertes C₅ bis C₆-Cycloalkyl, C₆ bis C₁₀-Aryl oder C₇ bis C₁₂- Aralkyl bedeuten,
m unabhängig voneinander 0, 1, 2, 3 oder 4 ist,
n 0,1 bis 5 ist und
R⁵ und R⁶ unabhängig voneinander C₁ bis C4-Alkyl bedeuten,
D) 0 bis 30 Gew.-% thermoplastisches Polymer, ausgewählt aus der Gruppe der Vinyl(co)polymerisate
E) 0 bis 5 Gew.-% fluoriertes Polyolefin
**dadurch gekennzeichnet, dass**
F) 0,5 bis 7 Gew.-% Polyphenylenether enthalten ist, wobei sich die Mengen der Komponenten sowie ggfs. enthaltener Additive zu 100 Gew.-% addieren.

2. Formmassen gemäß Anspruch 1, **dadurch gekennzeichnet, dass**
A) 45 bis 75 Gew.-%, insbesondere 45 bis 60 Gew.-% aromatisches Polycarbonat und/oder Polyestercarbonat
B) 2 bis 18 Gew.-%, insbesondere 3 bis 20 Gew.-% ABS-Polymerisat
C) 1 bis 18 Gew.-% Phosphatverbindung (I) oder eine Mischung von Phosphatverbindungen (I)
D) 0 bis 5 Gew.-% fluoriertes Polyolefin,
E) 0 bis 30 Gew.-% mindestens eines thermoplastischen Polymers, ausgewählt aus der Gruppe der Vinyl(co)polymerisate
F) 0,5 bis 6 Gew.-% Polyphenylenether
und ggfs. Additive enthalten sind, wobei sich die Mengen der Komponenten zu 100 Gew.-% addieren.

3. Formmassen gemäß Anspruch 1 oder 2, **dadurch gekennzeichnet, dass** n von 1 bis 1,5 beträgt und vorzugsweise ≤ 1,1 ist.

4. Formmassen gemäß einem der Ansprüche 1 bis 3, **dadurch gekennzeichnet, dass** R⁵ und R⁶ Methyl bedeuten.

5. Formmassen gemäß einem der Ansprüche 1 bis 4, **dadurch gekennzeichnet, dass** R¹, R², R³ und R⁴ unabhängig voneinander Methyl, Butyl, Octyl, Phenyl, Kresyl, Cumyl, Naphthyl Xylenyl, Propylphenyl oder Butylphenyl bedeuten.

6. Formmassen gemäß einem der Ansprüche 1 bis 5, **dadurch gekennzeichnet, dass** Additive, wie Gleit- und Entformungsmittel, Antistatika, Stabilisatoren, Füll- und Verstärkungsstoffe sowie Farbstoffe und/oder Pigmente enthalten sind.

7. Formmassen gemäß einem der Ansprüche 1 bis 6, **dadurch gekennzeichnet, dass** bis zu 35 Gew.-%, bezogen auf die Gesamt-Zusammensetzung, eines weiteren, gegebenenfalls synergistisch wirkenden, Flammschutzmittels, ausgewählt unter Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdänoxid, Ammoniummolybdat, Zinkborat, Ammoniumborat, Bariummetaborat, Talkum, Silikat, Siliziumoxid, Zinnoxid, Monophosphatverbindungen, oligomere Phosphatverbindungen oder Mischungen daraus, enthalten sind.

8. Formmassen gemäß einem der Ansprüche 1 bis 7, **dadurch gekennzeichnet, dass** das aromatische Polycarbonat ein Umsetzungsprodukt aus Diphenolen mit Kohlensäurehalogeniden und/oder aromatischen Dicarbonsäuredihalogeniden, gegebenenfalls unter Verwendung von Monophenolen als Kettenabbrechern und/oder Tri- oder Tetraphenolen als Verzweigern ist.

9. Formmassen gemäß einem der Ansprüche 1 bis 8 **dadurch gekennzeichnet, dass** das ABS-Polymerisat ein Pfropfpolymerisat von 5 bis 95, vorzugsweise 30 bis 90 Gew.-%, wenigstens eines Vinylmonomeren auf 95 bis 5, vorzugsweise 70 bis 10 Gew.-% einer oder mehrerer Pfropfgrundlagen mit Glasübergangs-temperaturen < 10 °C, vorzugsweise < 0 °C, besonders bevorzugt < -20 °C verwendet wird.

10. Formmassen gemäß einem der Ansprüche 1 bis 9, **dadurch gekennzeichnet, dass** ein thermoplastisches Polymer, vorzugsweise ein Vinyl(co)polymerisat, insbesondere ein (Co)Polymerisate aus 50 bis 99, vorzugsweise 60 bis 80 Gew.-% Vinylaromaten und/oder kernsubstituierten Vinylaromaten und/oder (Meth)Acrylsäure-Cl bis C8-Alkylester, und 1 bis 50, vorzugsweise 20 bis 40 Gew.-% Vinylcyaniden und/oder (Meth)Acrylsäure-C1 bis C8-Alkylester und/oder ungesättigten Carbonsäuren und/oder Anhydriden oder Imiden ungesättigter Carbonsäuren enthalten ist.

11. Formmassen gemäß Anspruch 10, **dadurch gekennzeichnet, dass** ein Copolymerisat aus Styrol und Acrylnitril enthalten ist.

12. Formmassen gemäß einem der Ansprüche 1 bis 11, **dadurch gekennzeichnet, dass** Polytetrafluorethylen, Polyvinylidenfluorid, Tetrafluorethylen/Hexafluorpropylen- und/oder Ethylen/Tetrafluorethylen-Copolymerisate als fluoriertes Polyolefin, insbesondere Polytetrafluorethylen, enthalten sind.

13. Formmassen gemäß einem der Ansprüche 1 bis 12, **dadurch gekennzeichnet, dass** der Polyphenylenether ein substituierter, insbesondere ein disubstituierter Polyphenylenether ist.

14. Formmassen gemäß Anspruch 13, **dadurch gekennzeichnet, dass** der Polyphenylenether in 2- und/oder 6-Stellung zum Sauerstoffatom durch Alkylreste mit 1 bis 4 Kohlenstoffatomen, die wiederum durch Hydroxylgruppen substituiert sein können, durch Alkoxyreste, vorzugsweise mit bis zu 4 Kohlenstoffatomen, oder durch gegebenenfalls durch Alkylgruppen substituierte Phenylreste substituiert ist.

15. Formmassen gemäß Anspruch 14, **dadurch gekennzeichnet, dass** der Polyphenylenether ein Copolymeres verschiedener Phenole oder ein Gemisch verschiedener Polyphenylenether ist.

16. Formmassen gemäß einem der Ansprüche 1 bis 15, **dadurch gekennzeichnet, dass** der Polyphenylenether mit Monomeren, wie Fumarsäure, Maleinsäure oder Maleinsäureanhydrid, modifiziert ist.

17. Formmassen gemäß einem der Ansprüche 1 bis 16, **dadurch gekennzeichnet, dass** der Polyphenylenether ausgewählt ist unter Poly(2,6-dilauryl-1,4-phenylenether), Poly(2,6-diphenyl-1,4-phenylenether), Poly(2,6-dimethoxy-1,4-phenylenether), Poly(2,6-diethoxy-1,4-phenylenether), Poly(2-methoxy-6-ethoxy-1,4-phenylenether), Poly(2-ethyl-6-stearyloxy-1,4-phenylenether, Poly(2-methyl-6-phenyl-1,4-phenylenether), Poly(2,6-dibenzyl-1,4-phenylenether), Poly(2-ethoxy-1,4-phenylenether), Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether) und Gemischen von zwei oder mehreren davon.

## Claims

1. Molding materials consisting of
A) 40 to 94 % by weight aromatic polycarbonate and/or polyester carbonate
B) 0.5 to 19 % by weight graft polymer with rubber-elastic properties, whereby the graft polymer is an ABS polymer
C) 0.5 to 20 % by weight phosphate compound of general formula (I) 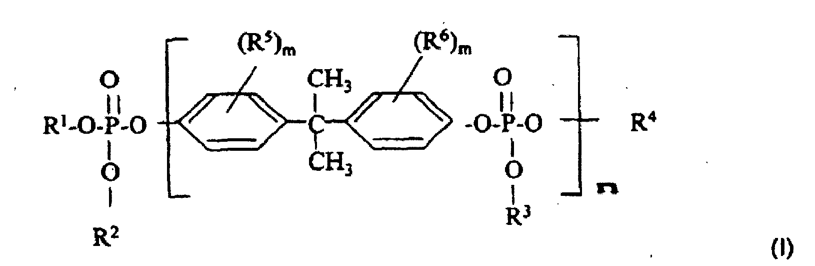
whereby R¹, R², R³, and R⁴, independently of each other, are C₁ to C₈ alkyl, each possibly alkyl-substituted by C₅ to C₆ cycloalkyl, C₆ to C₁₀ aryl or C₇ to C₁₂ aralkyl;
m equals 0, 1, 2, 3 or 4, independently of each other;
n equals 0.1 to 5; and
R⁵ and R⁶, independently of each other, are C₁ to C₄ alkyl;
D) 0 to 30 % by weight thermoplastic polymer selected from the group of the vinyl(co)polymers
E) 0 to 5 % by weight fluorinated polyolefin
**characterized in that**
F) they contain 0.5 to 7 % by weight polyphenylene ether, whereby the quantities of the components and additives possibly contained therein add up to 100 % by weight.

2. Molding materials according to claim 1, **characterized in that** they contain
A) 45 to 75 % by weight, in particular 45 to 60 % by weight aromatic polycarbonate and/or polyester carbonate
B) 2 to 18 % by weight, in particular 3 to 20 % by weight ABS polymer
C) 1 to 18 % by weight phosphate compound (I) or a mixture of phosphate compounds (I)
D) 0 to 5 % by weight fluorinated polyolefin,
E) 0 to 30 % by weight of at least one thermoplastic polymer selected from the group of the vinyl(co)polymers
F) 0.5 to 6 % by weight polyphenylene ether
and possibly additives, whereby the quantities of the components add up to 100 % by weight.

3. Molding materials according to claim 1 or 2, **characterized in that** n is 1 to 1.5 and preferably is ≤ 1.1.

4. Molding materials according to any one of the claims 1 to 3, **characterized in that** R⁵ and R⁶ are methyl.

5. Molding materials according to any one of the claims 1 to 4, **characterized in that** R¹, R², R³, and R⁴ independently of each other are methyl, butyl, octyl, phenyl, cresyl, cumyl, naphthyl, xylenyl, propylphenyl or butylphenyl.

6. Molding materials according to any one of the claims 1 to 5, **characterized in that** they contain additives such as lubricants and demolding agents, antistatic agents, stabilizers, fillers and reinforcing substances as well as dyes and/or pigments.

7. Molding materials according to any one of the claims 1 to 6, **characterized in that** they contain up to 35 % by weight, relative to the total composition, of another, possibly synergistically-acting, flame-proofing agent, selected from nitrogen compounds, such as melamine, melamine formaldehyde resins, inorganic hydroxide compounds, such as Mg hydroxide, Al hydroxide, inorganic compounds such as antimony oxides, barium metaborate, hydroxoantimonate, zirconium oxide, zirconium hydroxide, molybdenum oxide, ammonium molybdate, zinc borate, ammonium borate, barium metaborate, talcum, silicate, silicon oxide, tin oxide, monophosphate compounds, oligomeric phosphate compounds or mixtures thereof.

8. Molding materials according to any one of the claims 1 to 7, **characterized in that** the aromatic polycarbonate is a product of the conversion of diphenols and carbonic acid halides and/or aromatic dicarbonic acid dihalides, possibly involving the use of monophenols as chain-terminating agents and/or tri- or tetraphenols as chain-branching agents.

9. Molding materials according to any one of the claims 1 to 8, **characterized in that** the ABS polymer that is used is a graft polymer of 5 to 95, preferably 30 to 90 % by weight, of at least one vinyl monomer onto 95 to 5, preferably 70 to 10 % by weight of one or more graft bases having glass transition temperatures < 10 °C, preferably < 0 °C, particularly preferred < -20 °C.

10. Molding materials according to any one of the claims 1 to 9, **characterized in that** they contain a thermoplastic polymer, preferably a vinyl(co)polymer, in particular a (co)polymer made of 50 to 99, preferably 60 to 80 % by weight aromatic vinyl compound(s) and/or core-substituted aromatic vinyl compound(s) and/or (meth)acrylic acid-C₁ to C₈ alkyl ester, and 1 to 50, preferably 20 to 40 % by weight vinyl cyanides and/or (meth)acrylic acid-C₁ to C₈ alkyl ester and/or unsaturated carbonic acids and/or anhydrides or imides of unsaturated carbonic acids.

11. Molding materials according to claim 10, **characterized in that** they contain a copolymer made of styrene and acrylonitrile.

12. Molding materials according to any one of the claims 1 to 11, **characterized in that** they contain polytetrafluoroethylene, polyvinylidene fluoride, tetrafluoroethylene/hexafluoropropylene copolymers and/or ethylene/tetrafluoroethylene copolymers as fluorinated polyolefin, in particular polytetrafluoroethylene.

13. Molding materials according to any one of the claims 1 to 12, **characterized in that** the polyphenylene ether is a substituted, in particular a di-substituted, polyphenylene ether.

14. Molding materials according to claim 13, **characterized in that** the polyphenylene ether is substituted in 2- and/or 6-position with respect to the oxygen atom by alkyl residues having 1 to 4 carbon atoms, which, in turn, can be substituted by hydroxyl groups, by alkoxy residues, preferably having up to 4 carbon atoms, or possibly by phenyl residues that are possibly substituted by alkyl groups.

15. Molding materials according to claim 14, **characterized in that** the polyphenylene ether is a copolymer of various phenols or a mixture of various polyphenylene ethers.

16. Molding materials according to any one of the claims 1 to 15, **characterized in that** the polyphenylene ether is modified by monomers such as fumaric acid, maleic acid or maleic acid anhydride.

17. Molding materials according to any one of the claims 1 to 16, **characterized in that** the polyphenylene ether is selected from poly(2,6-dilauryl-1,4-phenylene ether), poly(2,6-diphenyl-1,4-phenylene ether), poly(2,6-dimethoxy-1,4-phenylene ether), poly(2,6-diethoxy-1,4-phenylene ether), poly(2-methoxy-6-ethoxy-1,4-phenylene ether), poly(2-ethyl-6-stearyl-oxy-1,4-phenylene ether), poly(2-methyl-6-phenyl-1,4-phenylene ether), poly(2,6-dibenzyl-1,4-phenylene ether), poly(2-ethoxy-1,4-phenylene ether), poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), and poly(2-ethyl-6-propyl-1,4-phenylene ether) and mixtures of two or more thereof.

## Revendications

1. Masses de moulage, constituées par
A) 40 à 94% en poids de polycarbonate aromatique et/ou de polyestercarbonate
B) 0,5 à 19% en poids de polymère greffé avec des propriétés élastiques caoutchouteuses, où le polymère greffé est un polymère d'ABS
C) 0,5 à 20% en poids de composé à base de phosphate de formule générale (I) 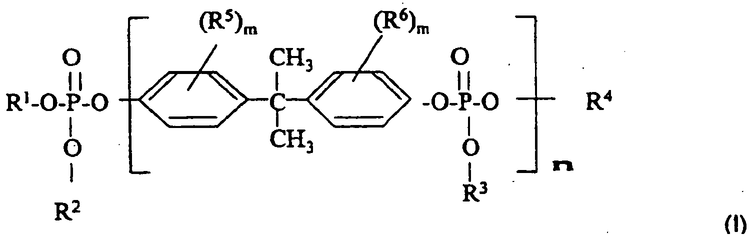 où
R¹, R², R³ et R⁴, indépendamment l'un de l'autre signifient C₁-C₈-alkyle ; C₅-C₆-cycloalkyle, C₆-C₁₀-aryle ou C₇-C₁₂-aralkyle à chaque fois, le cas échéant, substitué par alkyle,
m représente, indépendamment l'un de l'autre, 0, 1, 2, 3 ou 4,
n représente 0,1 à 5 et
R⁵ et R⁶ signifient indépendamment l'un de l'autre C₁-C₄-alkyle,
D) 0 à 30% en poids de polymère thermoplastique, choisi dans le groupe des (co)polymères de vinyle
E) 0 à 5% en poids de polyoléfine fluorée
**caractérisées en ce que**
F) elles contiennent 0,5 à 7% en poids de polyphénylénéther, la somme des quantités des composants ainsi que des additifs le cas échéant contenus valant 100% en poids.

2. Masses de moulage selon la revendication 1, **caractérisées en ce qu'**elles contiennent
A) 45 à 75% en poids, en particulier 45 à 60% en poids, de polycarbonate aromatique et/ou de polyestercarbonate
B) 2 à 18% en poids, en particulier 3 à 20% en poids de polymère d'ABS
C) 1 à 18% en poids de composé à base de phosphate (I) ou d'un mélange de composés à base de phosphate (I)
D) 0 à 5% en poids de polyoléfine fluorée
E) 0 à 30% en poids d'au moins un polymère thermoplastique, choisi dans le groupe des (co)polymères de vinyle
F) 0,5 à 6% en poids de polyphénylénéther
et le cas échéant des additifs, où la somme des composants vaut 100% en poids.

3. Masses de moulage selon la revendication 1 ou 2, **caractérisées en ce que** n vaut 1 à 1,5 et est de préférence ≤ 1,1.

4. Masses de moulage selon l'une quelconque des revendications 1 à 3, **caractérisées en ce que** R⁵ et R⁶ signifient méthyle.

5. Masses de moulage selon l'une quelconque des revendications 1 à 4, **caractérisées en ce que** R¹, R², R³ et R⁴ signifient, indépendamment l'un de l'autre, méthyle, butyle, octyle, phényle, crésyle, cumyle, naphtyle, xylényle, propylphényle ou butylphényle.

6. Masses de moulage selon l'une quelconque des revendications 1 à 5, **caractérisées en ce qu'**elles contiennent des additifs, tels que des lubrifiants et des agents de démoulage, des antistatiques, des stabilisateurs, des charges et des substances de renforcement ainsi que des colorants et/ou des pigments.

7. Masses de moulage selon l'une quelconque des revendications 1 à 6, **caractérisées en ce qu'**elles contiennent à raison de jusqu'à 35% en poids, par rapport à la composition totale, d'un autre agent ignifuge, agissant le cas échéant synergiquement, choisi parmi les composés azotés, tels que la mélamine, les résines de mélamine-formaldéhyde, les composés hydroxyde inorganiques, tels que l'hydroxyde de Mg, d'Al, les composés inorganiques tels que les oxydes d'antimoine, le métaborate de baryum, l'hydroxoantimonate, l'oxyde de zirconium, l'hydroxyde de zirconium, l'oxyde de molybdène, le molybdate d'ammonium, le borate de zinc, le borate d'ammonium, le métaborate de baryum, le talc, le silicate, l'oxyde de silicium, l'oxyde d'étain, les composés monophosphatés, les composés oligomères à base de phosphate ou leurs mélanges.

8. Masses de moulage selon l'une quelconque des revendications 1 à 7, **caractérisées en ce que** le polycarbonate aromatique est un produit de réaction de diphénols avec des halogénures d'acide carbonique et/ou des dihalogénures d'acides dicarboxyliques aromatiques, le cas échéant en utilisant des monophénols comme agents d'interruption de chaîne et/ou des triphénols ou des tétraphénols comme agents de ramification.

9. Masses de moulage selon l'une quelconque des revendications 1 à 8, **caractérisées en ce qu'**on utilise comme polymère d'ABS un polymère greffé de 5 à 95, de préférence de 30 à 90% en poids, d'au moins un monomère de vinyle sur 95 à 5, de préférence 70 à 10% en poids d'une ou de plusieurs bases de greffage présentant des températures de transition vitreuse < 10°C, de préférence < 0°C, de manière particulièrement préférée < -20°C.

10. Masses de moulage selon l'une quelconque des revendications 1 à 9, **caractérisées en ce qu'**elles contiennent un polymère thermoplastique, de préférence un (co)polymère de vinyle, en particulier un (co)polymère constitué par 50 à 99, de préférence par 60 à 80% en poids d'aromatiques de vinyle et/ou d'aromatiques de vinyle à noyau substitué et/ou d'esters C₁-C₈-alkyliques de l'acide (méth)acrylique et par 1 à 50, de préférence 20 à 40% en poids de vinylcyanures et/ou d'esters C₁-C₈-alkyliques de l'acide (méth)acrylique et/ou d'acides carboxyliques insaturés et/ou d'anhydrides ou d'imides d'acides carboxyliques insaturés.

11. Masses de moulage selon la revendication 10, **caractérisées en ce qu'**elles contiennent un copolymère de styrène et d'acrylonitrile.

12. Masses de moulage selon l'une quelconque des revendications 1 à 11, **caractérisées en ce qu'**elles contiennent du polytétrafluoroéthylène, du poly(fluorure de vinylidène), des copolymères de tétrafluoroéthylène/hexafluoropropylène et/ou d'éthylène/tétrafluoroéthylène comme polyoléfine fluorée, en particulier du polytétrafluoroéthylène.

13. Masses de moulage selon l'une quelconque des revendications 1 à 12, **caractérisées en ce que** le polyphénylénéther est un polyphénylénéther substitué, en particulier disubstitué.

14. Masses de moulage selon la revendication 13, **caractérisées en ce que** le polyphénylénéther est substitué en 2ème et/ou 6ème position par rapport à l'atome d'oxygène par des radicaux alkyle comprenant 1 à 4 atomes de carbone, qui peuvent à nouveau être substitués par des groupes hydroxyle, par des radicaux alcoxy, comprenant de préférence jusqu'à 4 atomes de carbone ou par des radicaux phényle le cas échéant substitués par des groupes alkyle.

15. Masses de moulage selon la revendication 14, **caractérisées en ce que** le polyphénylénéther est un copolymère de différents phénols ou un mélange de différents polyphénylénéthers.

16. Masses de moulage selon l'une quelconque des revendications 1 à 15, **caractérisées en ce que** le polyphénylénéther est modifié par des monomères, tels que l'acide fumarique, maléique ou l'anhydride de l'acide maléique.

17. Masses de moulage selon l'une quelconque des revendications 1 à 16, **caractérisées en ce que** le polyphénylénéther est choisi parmi le poly(2,6-dilauryl-1,4-phénylénéther), le poly(2,6-diphényl-1,4-phénylénéther), le poly(2,6-diméthoxy-1,4-phénylénéther), le poly(2,6-diéthoxy-1,4-phénylénéther), le poly(2-méthoxy-6-éthoxy-1,4-phénylénéther), le poly(2-éthyl-6-stéaryloxy-1,4-phénylénéther), le poly(2-méthyl-6-phényl-1,4-phénylénéther), le poly(2,6-dibenzyl-1,4-phénylénéther), le poly(2-éthoxy-1,4-phénylénéther), le poly(2,6-diméthyl-1,4-phénylénéther), le poly(2,6-diéthyl-1,4-phénylénéther), le poly(2-méthyl-6-éthyl-1,4-phénylénéther), le poly(2-méthyl-6-propyl-1,4-phénylénéther), le poly(2,6-dipropyl-1,4-phénylénéther) et le poly(2-éthyl-6-propyl-1,4-phénylénéther) et les mélanges de deux ou plus parmi ceux-ci.
